(19) Europäisches Patentamt
European Patent Office
Office européen des brevets

(11) **EP 2 453 664 A2**

(12) **EUROPEAN PATENT APPLICATION**

(43) Date of publication:
**16.05.2012 Bulletin 2012/20**

(51) Int Cl.:
***H04N 17/02*** *(2006.01)*

(21) Application number: **11185013.7**

(22) Date of filing: **13.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.11.2010   US 943081**

(71) Applicant: **Ericsson Television Inc.
Duluth, Georgia 30096 (US)**

(72) Inventor: **Gordon, Iouri
Santa Monica 90401, CA California (US)**

(74) Representative: **Rees, Simon John Lewis
Haseltine Lake LLP
Redcliff Quay
120 Redcliff Street
Bristol BS1 6HU (GB)**

(54) **Transcode video verifier device and method for verifying a quality of a transcoded video file**

(57)    A transcode video verifier device and a method are described herein that verify a quality of a transcoded video file by comparing the transcoded video file with its original source video file.

FIG. 2

**Description**

**TECHNICAL FIELD**

The present invention relates to a transcode video verifier device and a method for verifying a quality of a transcoded video file by comparing the transcoded video file with its original source video file.

**BACKGROUND**

In today's rapidly evolving digital media landscape, the volume of digital video content for distribution and the number of different end-user devices continue to grow at an unprecedented rate. This rapidly expanding video consumption requires that the same file based video content be provisioned into different video formats so that the video content can be displayed on different types of end-user devices. To provision digital video content into different video formats involves a video transcoding process in which the digital video content is decompressed (decoded) into a raw video and then the raw video is compressed (encoded) into a new format. One example of a video transcoding process is the conversion of MPEG2 video which is the de facto standard of the cable television industry into MPEG4 video which is very popular with the satellite television industry, as well as with Internet base video companies.

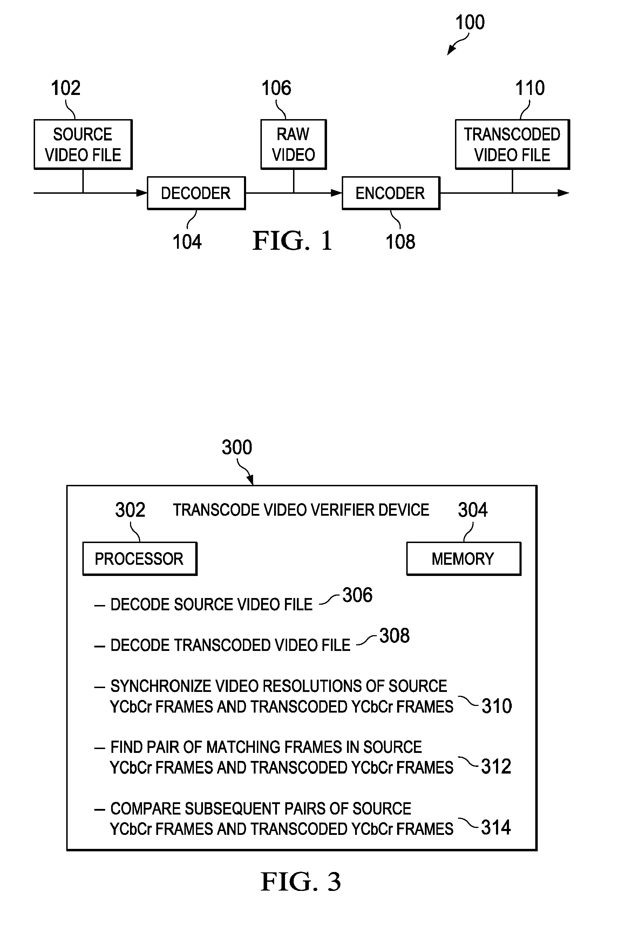

Referring to FIGURE 1 (PRIOR ART), there is a block diagram illustrating a traditional video transcoding device 100 that implements a general transcoding process where an original source video file 102 in one format is decompressed by a decoder 104 to form a raw video 106 which is then compressed by an encoder 108 to form a transcoded video file 110 which has a different format. Both the decoder 104 and the encoder 108 could be implemented by either software or hardware. The software version of the decoder 104 and encoder 108 can provide greater accuracy and reliability in general but they require more time than real-time to perform the transcoding process. The hardware version of the decoder 104 and encoder 108 are able to perform the transcoding process in real-time. However, in both versions the transcoding process is not guaranteed to be lossless, and hence there is a need to verify that the video transcoding was performed without any issues. One of the issues that needs to be checked after performing the transcoding process is the need to verify the overall quality of the transcoded video file 110. In particular, there is a need to check the overall quality of the transcoded video file 110 to verify that no extra video frames had been added to the transcoded video file 110 either at the beginning or at the end.

Currently there are a number of existing tools that can be used to verify the quality of the transcoded video file 110. For example, these tools can include Certify (Tektronix), Baton (Interra Systems), MP2TSA/MP2TSAE (Manzanita) in which the verification process is performed by verifying the contents of the transcoded video file 110 against video standards. Some of these tools report extra black frames in the video itself. There is a different set of tools like Vega Video Comparator (Interra Systems) that can be used to compare two video streams (not files) against each other. Although these tools work relatively well there is still a desire to improve the way the quality of a transcoded video file can be verified. This need and other needs are satisfied by a transcode video verifier device and method of the present invention.

**SUMMARY**

In an aspect, the present invention provides a hardware transcode video verifier device for verifying a quality of a transcoded video file by comparing the transcoded video file with its original source video file. The hardware transcode video verifier device comprises: (1) a source decoder unit that receives a source video file, decodes the source video file, and generates source YCbCr frames; (2) a transcode decoder unit that receives the transcoded video file, decodes the transcoded video file, and generates transcoded YCbCr frames; and (3) a frame comparator unit that finds a pair of matching frames in the source YCbCr frames and the transcoded YCbCr frames, and then compares one-by-one all subsequent pairs of frames in the source YCbCr frames and the transcoded YCbCr frames to obtain quality values used to determine if the transcoded video file is to be rejected on a quality basis. An advantage of the hardware transcode video verifier device is that it improves the overall quality of video verification by comparing the transcoded video file with its original source video file rather than comparing the transcoded video file with video standards.

In another aspect, the present invention provides a hardware-software transcode video verifier device for verifying a quality of a transcoded video file by comparing the transcoded video file with its original source video file. The hardware-software transcode video verifier device comprises: (1) a processor; and (2) a non-transitory memory that stores processor-executable instructions wherein the processor interfaces with the non-transitory memory and executes the processor-executable instructions to: (a) receive a source video file, decode the source video file, and generate source YCbCr frames; (b) receive the transcoded video file, decode the transcoded video file, and generate transcoded YCbCr frames; (c) find a pair of matching frames in the source YCbCr frames and the transcoded YCbCr frames; and (d) compare one-by-one all subsequent pairs of frames in the source YCbCr frames and the transcoded YCbCr frames to obtain quality values used to determine if the transcoded video file is to be rejected on a quality basis. An advantage of the hardware-software transcode video verifier device is that it improves the overall quality of video verification by comparing the transcoded video file with its original source video file rather than comparing the transcoded video file with video standards.

In yet another aspect, the present invention provides a method for verifying a quality of a transcoded video file by comparing the transcoded video file with its original source video file. The method comprises the steps of: (a) decoding a source video file, where the source video file decoding step includes receiving the source video file, decoding the source video file, and generating source YCbCr frames; (b) decoding the transcoded video file, where the transcoded video file decoding step includes receiving the transcoded video file, decoding the transcoded video file, and generating transcoded YCbCr frames; and (c) comparing the source YCbCr frames and the transcoded YCbCr frames, where the comparing step includes finding a pair of matching frames in the source YCbCr frames and the transcoded YCbCr frames, and then comparing one-by-one all subsequent pairs of frames in the source YCbCr frames and the transcoded YCbCr frames to obtain quality values used to determine if the transcoded video file is to be rejected on a quality basis. An advantage of the method is that it improves the overall quality of video verification by comparing the transcoded video file with its original source video file rather than comparing the transcoded video file with video standards.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

## BRIEF DESCRIPTION OF THE DRAWINGS

A more complete understanding of the present invention may be obtained by reference to the following detailed description when taken in conjunction with the accompanying drawings:

FIGURE 1 (PRIOR ART) is a block diagram illustrating the basic components of a traditional video transcoding device that implements a general transcoding process to convert a source video file having one format into a transcoded video file having a different format;

FIGURE 2 is a block diagram illustrating an exemplary hardware version of a transcode video verifier device in accordance with an embodiment of the present invention;

FIGURE 3 is a block diagram illustrating an exemplary hardware-software version of a transcode video verifier device in accordance with an embodiment of the present invention; and

FIGURE 4 is a flowchart illustrating the basic steps of a method for verifying a quality of a transcoded video file in accordance with an embodiment of the present invention.

## DETAILED DESCRIPTION

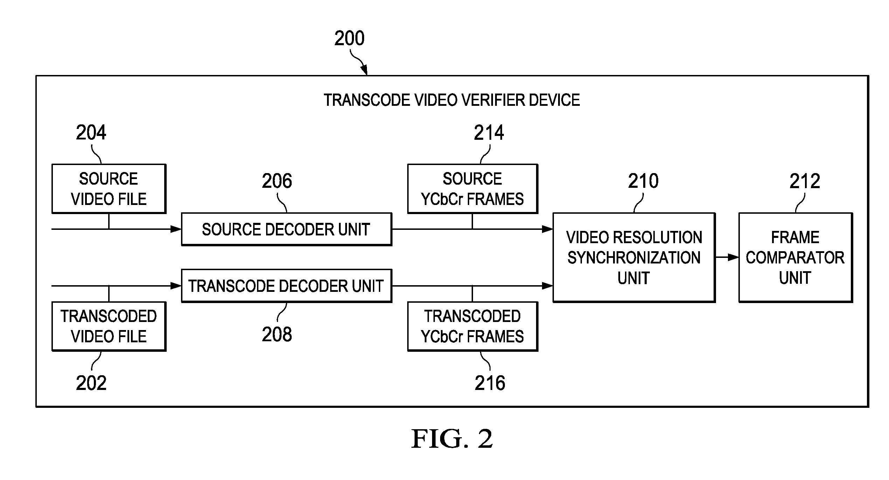

Referring to FIGURE 2, there is shown a block diagram illustrating an exemplary hardware version of a transcode video verifier device 200 that verifies a quality of a transcoded video file 202 by comparing the transcoded video file 202 with its original source video file 204 in accordance with an embodiment of the present invention. The transcode video verifier device 200 includes a source decoder unit 206, a transcode decoder unit 208, a video resolution synchronization unit 210, and a frame comparator unit 212. As shown, the source decoder unit 206 receives the source video file 204, decodes the source video file 204, and generates source YCbCr frames 214. The transcode decoder unit 208 receives the transcoded video file 202, decodes the transcoded video file 202, and generates transcoded YCbCr frames 216. The video resolution synchronization unit 210 determines if the source YCbCr frames 214 and the transcoded YCbCr frames 216 have different video resolutions and if yes then it scales-down a video resolution of either the source YCbCr frames 214 or the transcoded YCbCr frames 216 whichever has a larger video resolution to match a video resolution of either the source YCbCr frames 214 or the transcoded YCbCr frames 216 whichever has a smaller video resolution. Thereafter, the frame comparator unit 212 finds a pair of matching frames in the source YCbCr frames 214 and the transcoded YCbCr frames 216, and then compares one-by-one all subsequent pairs of frames in the source YCbCr frames 214 and the transcoded YCbCr frames 216 to obtain quality values each of which are compared to a predetermined threshold value to determine if the transcoded video file 202 is to be rejected on a quality basis. A more detailed discussion is provided next about the functions of the source decoder unit 206, the transcode decoder unit 208, the video resolution synchronization unit 210, and the frame comparator unit 212.

The transcoded video file 202 and the source video file 204 are encoded/compressed video files that are made-up of video frames. The source decoder unit 206 receives the source video file 204 which could have been encoded with any available encoder. The transcode decoder unit 208 receives the transcoded video file 202 which could have been encoded with the same encoder used to encode the source video file 204. Or, the transcode decoder unit 208 can receive the transcoded video file 202 which has been encoded with any available encoder. Because, the transcoded video file 202 and the source video file 204 could be encoded using different video encoders, two decoders are used namely the source decoder unit 206 and the transcode decoder unit 208 both of which operate in parallel.

The source decoder unit 206 and the transcode decoder unit 208 both function to find and decode the video frames and present them in color spaces (e.g., YCbCr, RGB) available as a set of pixels. If desired, the source decoder unit 206 and the transcode decoder unit 208 can convert image data from one color space to another color space by applying the proper conversion formulas. Plus, if the transcoded video file 202 or the source video file 204 is encoded as an interlaced field sequence, then the transcode decoder unit 208 or the source decoder unit 206 can combine the two fields of the interlaced field sequence into a single frame. In any case, the source decoder unit 206 outputs the source YCbCr frames 214 and the transcode decoder unit 208 outputs transcode YCbCr fames 216.

The video resolution synchronization unit 210 receives the source YCbCr frames 214 and the transcoded YCbCr frames 216 and then determines if the source YCbCr frames 214 and the transcoded YCbCr frames 216 have different video resolutions and if yes then it scales-down a video resolution of either the source YCbCr frames 214 or the transcoded YCbCr frames 216 whichever has a larger video resolution to match a video resolution of either the source YCbCr frames 214 or the transcoded YCbCr frames 216 whichever has a smaller video resolution. The video resolution synchronization unit 210 is present because the video resolution can be purposely changed during the transcoding process. For example, a source video file 204 containing high definition video of 1920x1080 resolution can be transcoded into a standard definition video that has resolution of 704x480 pixels. However, it is not possible to compare source YCbCr frames 214 and transcoded YCbCr frames 216 that have different dimensions. Thus, to make frame comparison possible, the frame of the bigger resolution is downscaled to match a smaller resolution of the other frame. In other words, if the transcoded video file 202 and original source video file 204 have different video resolutions once the full frames have been decoded then the bigger frames are scaled down to have the same resolution as the smaller frames. In the previous example, the 1920x1080 frame would be downsized to a 704x480 frame. The video resolution synchronization unit 210 would not be needed if the source YCbCr frames 214 and transcoded YCbCr frames 216 had the same video resolutions.

The frame comparator unit 212 receives the source YCbCr frames 214 and transcoded YCbCr frames 216 one of which may have been re-scaled so they have the same video resolution. The frame comparator unit 212 then attempts to find a pair of matching frames from the source YCbCr frames 214 and the transcoded YCbCr frames 216. If a pair a matching frames are found, then the frame comparator 212 compares one-by-one all subsequent pairs of frames in the source YCbCr frames 214 and the transcoded YCbCr frames 216 to obtain quality values each of which are compared to a predetermined threshold value to determine if the transcoded video file 202 is to be rejected on a quality basis. If a pair of matching frames are not found, then the frame comparator 212 indicates that the transcoding of the source vide file 204 did not happen or there was a serious error in the transcoding process.

As can be seen, the frame comparator unit 212 essentially implements two functionalities. First, the frame comparator unit 212 synchronizes the source YCbCr frames 214 and transcoded YCbCr frames 216 by finding a first pair of matching frames from the source YCbCr frames 214 and transcoded YCbCr frames 216. Second, the frame comparator unit 212 compares all subsequent pairs of frames after the first pair of matching frames until the end of either the source YCbCr frames 214 and transcoded YCbCr frames 216 is reached. An example of how these two functionalities can be performed is described in detail below.

In the first functionality, the frame comparator unit 212 synchronizes the source YCbCr frames 214 and transcoded YCbCr frames 216 by finding a first pair of matching frames the source YCbCr frames 214 and transcoded YCbCr frames 216. The frame comparator unit 212 can accomplish this by: (1) creating a video fingerprint of a first frame from the source YCbCr frames 214 using a YCbCr histogram; (2) searching the transcoded YCbCr frames 216 to find a transcoded YCbCr frame that matches the video fingerprint of the first frame in the source YCbCr frames 214; (3) if the searching step is not successful, then creating a video fingerprint of a second frame from the source YCbCr frames 214 using a YCbCr histogram, and searching the transcoded YCbCr frames 216 to find a transcoded YCbCr frame that matches the video fingerprint of the second frame in the source YCbCr frames 214; and (4) if the second searching step is not successful, then repeating the creating step and the searching step using another frame from the source YCbCr frames 214 until a corresponding transcoded YCbCr frame is found in the transcoded YCbCr frames 216 or an end of the source YCbCr frames 214 is reached at which point it is assumed that a transcode never happened.

In the second functionality, the frame comparator unit 212 once the matching pair of video frames has been found then compares one-by-one all subsequent pairs of frames in the source YCbCr frames 214 and the transcoded YCbCr frames 216 to obtain quality values by: (1) computing a mean square error (MSE) for each subsequent pair of frames; and (2) computing a peak signal to noise ratio (PSNR) for each subsequent pair of frames using in part the corresponding computed MSE. In particular, the frame comparator unit 212 can compare pairs of video frames from the source YCbCr frames 214 and the transcoded YCbCr frames 216 using PSNR which is an error metric used to compare image qualities. The PSNR value represents a measure of peak error between the corresponding pairs of source YCbCr frames 214 and the transcoded YCbCr frames 216. The higher the PSNR value then the better the quality of the transcoded YCbCr frames 216. In this example, the PSNR values are calculated only for the luma portion of the YCbCr images since the luma component affects human perception the most. To compute the PSNR values, the frame comparator unit 212 needs to first compute MSE which is another error metric used to compare image qualities. The MSE represents the cumulative squared error between the source YCbCr frames 214 and the transcoded YCbCr frames 216, where the lower the value of the MSE then the lower the error. The MSE could be computed by using equation no. 1:

$$MSE = \frac{\sum_{M,N} [I_1(m,n) - I_2(m,n)]^2}{M * N} \qquad (1)$$

where M and N are the width and the height of the pair of video frames from the source YCbCr frames 214 and the transcoded YCbCr frames 216, $I_1$ is the luma value of the source YCbCr frame 214, and $I_2$ is the luma value of the transcoded YCbCr frame 216. Then the PSNR could be computed using equation no. 2:

$$PSNR = 10 \log_{10} \left( \frac{R^2}{MSE} \right) \qquad (2)$$

where R the maximum possible value of the pixel in the image and it is calculated as $2^{n-1}$ where n is the number of bits used to represent a pixel. For instance, two frames in which PSNR value falls below 35 dB could be considered to be badly transcoded and as such the transcoded video file 204 would be rejected on a quality basis.

Referring to FIGURE 3, there is a block diagram illustrating an exemplary hardware-software version of a transcode video verifier device 3 00 that verifies a quality of a transcoded video file 202 by comparing the transcoded video file 202 with its original source video file 204 in accordance with an embodiment of the present invention. The transcode video verifier device 300 includes a processor 302 and a non-transitory memory 304 that stores processor-executable instructions wherein the processor 302 interfaces with the non-transitory memory 304 and executes the processor-executable instructions to: (a) receive the source video file 204, decode the source video file 204, and generate source YCbCr frames 214 (step 306); (b) receive the transcoded video file 202, decode the transcoded video file 202, and generate transcoded YCbCr frames 216 where the source video file 202 was previously used to obtain the transcoded video file 204 (step 308); (c) determine if the source YCbCr frames 214 and the transcoded YCbCr frames 216 have different video resolutions and if yes then scale-down a video resolution of either the source YCbCr frames 214 or the transcoded YCbCr frames 216 whichever has a larger video resolution to match a video resolution of either the source YCbCr frames 214 or the transcoded YCbCr frames 216 whichever has a smaller video resolution (step 310); (d) find a pair of matching frames in the source YCbCr frames 214 and the transcoded YCbCr frames 216 (step 312)(see discussion above with respect to transcode video verifier device 200); and (e) compare one-by-one all subsequent pairs of frames in the source YCbCr frames 214 and the transcoded YCbCr frames 214 to obtain quality values each of which are compared to a predetermined threshold value to determine if the transcoded video file 204 is to be rejected on a quality basis (step 314)(see discussion above with respect to transcode video verifier device 200).

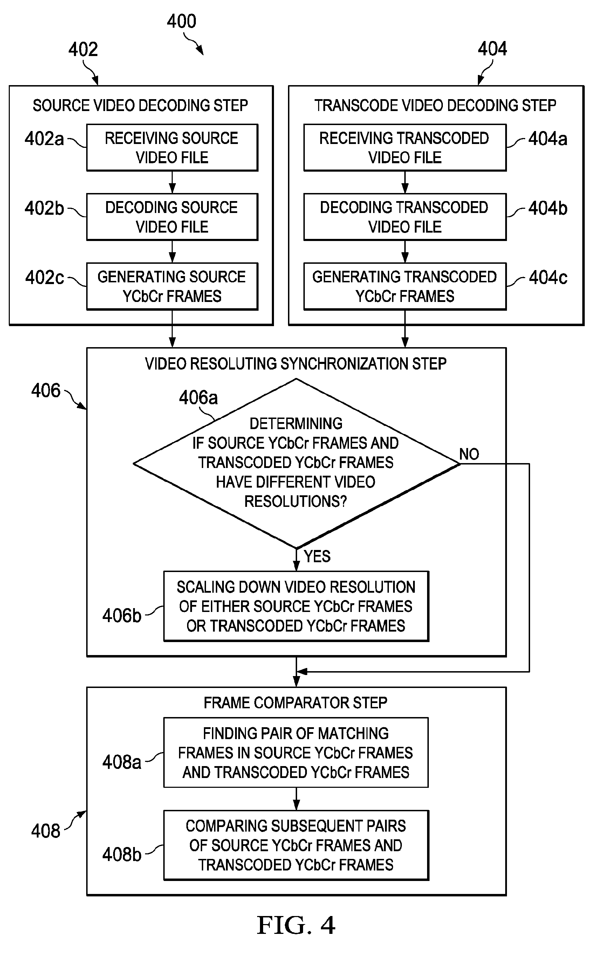

Referring to FIGURE 4, there is a flowchart illustrating the basic steps of a method 400 for verifying a quality of a transcoded video file 202 by comparing the transcoded video file 202 with its original source video file 204 in accordance with an embodiment of the present invention. As shown, the method 400 includes a source video decoding step 402, a transcoded video decoding step 404, a video resolution synchronization step 406, and a frame comparator step 408. The source video decoding step 402 includes the steps of receiving the source video file 204 (step 402a), decoding the source video file 204 (step 402b), and generating source YCbCr frames 214 (step 402c). The transcoded video decoding step 404 includes the steps of receiving the transcoded video file 202 (step 404a), decoding the transcoded video file 202 (step 404b), and generating transcoded YCbCr frames 216 (step 404c). The video resolution synchronization step 406 includes the steps of determining (step 406a) if the source YCbCr frames 214 and the transcoded YCbCr frames 216 have different video resolutions and if no then proceeding to the frame comparator step 408 and if yes then scaling-down (step 406b) a video resolution of either the source YCbCr frames 214 or the transcoded YCbCr frames 216 whichever has a larger video resolution to match a video resolution of either the source YCbCr frames 214 or the transcoded YCbCr frames 216 whichever has a smaller video resolution. The frame comparator step 408 includes the steps of finding (step 408a) a pair of matching frames in the source YCbCr frames 214 and the transcoded YCbCr frames 216, and then comparing (step 408b) one-by-one all subsequent pairs of frames in the source YCbCr frames 214 and the transcoded YCbCr frames 216 to obtain quality values used to determine if the transcoded video file 202 is to be rejected on a quality basis. An exemplary finding step 408a and an exemplary comparing step 408b have been discussed in detail above with respect to transcode video verifier device 200.

From the foregoing, one skilled in the art will appreciate that the transcode video verifier device 200 and 300 and method 400 verify a quality of a transcoded video file 202 by comparing the transcoded video file 202 with its original source video file 204. The verification of the transcode process is done by verifying video frames presence and similarity. The verification of the transcoding process could be implemented either in hardware, software or any combination thereof. The verification is applied to a source video file and a transcoded video file once the actual transcoding process is complete. The transcode video verifier device 200 and 300 could be used as standalone module which is manually invoked by an operator or it could be a part of a large automated system. An example of a large automated system that could be revised to incorporate the present invention is Ericsson's Watch Point Workflow system. In such an enhanced Watch Point Workflow system an order is created specifying the source file, transcode type to be applied to the source file, and the output file and then once this transcoding order is complete the transcode video verifier 200 and 300 or method 400 would be invoked to compare the source video file and the transcoded video file to verify quality and accuracy of the transcoding process. The present invention has several advantages where one of which is that it enables the automatic verification of a transcoded video file. Automatic video verification would reduce the man hours which are currently needed to verify the quality of the transcode process. The overall quality verification process would improve since there is no room left for human error. Productivity would increase because automatic video verification is definitely faster than having a person looking at each frame, and given proper hardware resources could be made to work faster than real time.

Furthermore, one skilled in the art should also appreciate that the present invention can also include a computer program product comprising computer readable code which, when run in a computer causes the computer to perform a source video decoding operation, a transcoded video decoding operation, a video resolution synchronization operation, and a frame comparator operation. The source video decoding operation includes receiving the source video file 204, decoding the source video file 204, and generating source YCbCr frames 214. The transcoded video decoding operation includes receiving the transcoded video file 202, decoding the transcoded video file 202, and generating transcoded YCbCr frames 216. The video resolution synchronization operation includes determining if the source YCbCr frames 214 and the transcoded YCbCr frames 216 have different video resolutions and if no then proceeding to the frame comparator operation and if yes then scaling-down a video resolution of either the source YCbCr frames 214 or the transcoded YCbCr frames 216 whichever has a larger video resolution to match a video resolution of either the source YCbCr frames 214 or the transcoded YCbCr frames 216 whichever has a smaller video resolution. The frame comparator operation includes finding a pair of matching frames in the source YCbCr frames 214 and the transcoded YCbCr frames 216, and then comparing one-by-one all subsequent pairs of frames in the source YCbCr frames 214 and the transcoded YCbCr frames 216 to obtain quality values used to determine if the transcoded video file 202 is to be rejected on a quality basis. An exemplary finding operation and an exemplary comparing operation have been discussed in detail above with respect to transcode video verifier device 200.

Although multiple embodiments of the present invention have been illustrated in the accompanying Drawings and described in the foregoing Detailed Description, it should be understood that the invention is not limited to the disclosed embodiments, but instead is also capable of numerous rearrangements, modifications and substitutions without departing from the present invention that as has been set forth and defined within the following claims.

## Claims

1. A transcode video verifier device for verifying a quality of a transcoded video file, the transcode video verifier apparatus comprising:

   a source decoder unit that receives a source video file, decodes the source video file, and generates source YCbCr frames;
   a transcode decoder unit that receives the transcoded video file, decodes the transcoded video file, and generates transcoded YCbCr frames, where the source video file was previously used to obtain the transcoded video file; and
   a frame comparator unit that finds a pair of matching frames in the source YCbCr frames and the transcoded YCbCr frames, and then compares one-by-one all subsequent pairs of frames in the source YCbCr frames and the transcoded YCbCr frames to obtain quality values used to determine if the transcoded video file is to be rejected on a quality basis.

2. The transcode video verifier device of claim 1, further comprising a video resolution synchronization unit located between the two decoder units and the frame comparator unit, where the video resolution synchronization unit determines if the source YCbCr frames and the transcoded YCbCr frames have different video resolutions and if yes then scales-down a video resolution of either the source YCbCr frames or the transcoded YCbCr frames whichever has a larger video resolution to match a video resolution of either the source YCbCr frames or the transcoded YCbCr frames whichever has a smaller video resolution.

**3.** The transcode video verifier device of claim 1, wherein the frame comparator unit finds a pair of matching frames in the source YCbCr frames and the transcoded YCbCr frames by:

creating a video fingerprint of a first frame from the source YCbCr frames using a YCbCr histogram;
searching the transcoded YCbCr frames to find a transcoded YCbCr frame that matches the video fingerprint of the first frame in the source YCbCr frames;
if the searching step is not successful, then creating a video fingerprint of a second frame from the source YCbCr frames using a YCbCr histogram, and searching the transcoded YCbCr frames to find a transcoded YCbCr frame that matches the video fingerprint of the second frame in the source YCbCr frames; and
if the second searching step is not successful, then repeating the creating step and the searching step using another frame from the source YCbCr frames until a corresponding transcoded YCbCr frame is found in the transcoded YCbCr frames or an end of the source YCbCr frames is reached.

**4.** The transcode video verifier device of claim 1, wherein the frame comparator unit compares one-by-one all subsequent pairs of frames in the source YCbCr frames and the transcoded YCbCr frames by computing a mean square error, MSE, for each subsequent pair of frames and then computing a peak signal to noise ratio, PSNR, for each subsequent pair of frames using in part the corresponding computed MSE frames to obtain quality values used to determine if the transcoded video file is to be rejected on a quality basis.

**5.** The transcode video verifier device of claim 4, wherein values used for computing the MSE and the PSNR are taken from luma planes of the source YCbCr frames and the transcoded YCbCr frames.

**6.** A transcode video verifier device for verifying a quality of a transcoded video file, the transcode video verifier device comprising:

a processor; and
a non-transitory memory that stores processor-executable instructions wherein the processor interfaces with the non-transitory memory and executes the processor-executable instructions to:

receive a source video file, decode the source video file, and generate source YCbCr frames;
receive the transcoded video file, decode the transcoded video file, and generate transcoded YCbCr frames, where the source video file was previously used to obtain the transcoded video file; and
find a pair of matching frames in the source YCbCr frames and the transcoded YCbCr frames, and then compare one-by-one all subsequent pairs of frames in the source YCbCr frames and the transcoded YCbCr frames to obtain quality values used to determine if the transcoded video file is to be rejected on a quality basis.

**7.** The transcode video verifier device of claim 6, wherein the processor further executes the processor-executable instructions to determine if the source YCbCr frames and the transcoded YCbCr frames have different video resolutions and if yes then scale-down a video resolution of either the source YCbCr frames or the transcoded YCbCr frames whichever has a larger video resolution to match a video resolution of either the source YCbCr frames or the transcoded YCbCr frames whichever has a smaller video resolution.

**8.** The transcode video verifier device of claim 6, wherein the processor further executes the processor-executable instructions to find a pair of matching frames in the source YCbCr frames and the transcoded YCbCr frames by:

creating a video fingerprint of a first frame from the source YCbCr frames using a YCbCr histogram;
searching the transcoded YCbCr frames to find a transcoded YCbCr frame that matches the video fingerprint of the first frame in the source YCbCr frames;
if the searching step is not successful, then creating a video fingerprint of a second frame from the source YCbCr frames using a YCbCr histogram, and searching the transcoded YCbCr frames to find a transcoded YCbCr frame that matches the video fingerprint of the second frame in the source YCbCr frames; and

if the second searching step is not successful, then repeating the creating step and the searching step using another frame from the source YCbCr frames until a corresponding transcoded YCbCr frame is found in the transcoded YCbCr frames or an end of the source YCbCr frames is reached.

9. The transcode video verifier device of claim 6, wherein the processor further executes the processor-executable instructions to compare one-by-one all subsequent pairs of frames in the source YCbCr frames and the transcoded YCbCr frames by computing a mean square error, MSE, for each subsequent pair of frames and then computing a peak signal to noise ratio, PSNR, for each subsequent pair of frames using in part the corresponding computed MSE to obtain quality values used to determine if the transcoded video file is to be rejected on a quality basis.

10. The transcode video verifier device of claim 9, wherein values used for computing the MSE and the PSNR are taken from luma planes of the source YCbCr frames and the transcoded YCbCr frames.

11. A method for verifying a quality of a transcoded video file, the method comprising the steps of:

decoding a source video file, where the source video file decoding step comprises the steps of receiving the source video file, decoding the source video file, and generating source YCbCr frames;
decoding the transcoded video file, where the transcoded video file decoding step comprises the steps of receiving the transcoded video file, decoding the transcoded video file, and generating transcoded YCbCr frames, where the source video file was previously used to obtain the transcoded video file; and
comparing the source YCbCr frames and the transcoded YCbCr frames, where the comparing step comprises the steps of finding a pair of matching frames in the source YCbCr frames and the transcoded YCbCr frames, and then comparing one-by-one all subsequent pairs of frames in the source YCbCr frames and the transcoded YCbCr frames to obtain quality values used to determine if the transcoded video file is to be rejected on a quality basis.

12. The method of claim 11, wherein between the two decoding steps and the frame comparing step there is a video resolution synchronization step which comprises the steps of determining if the source YCbCr frames and the transcoded YCbCr frames have different video resolutions and if yes then scaling-down a video resolution of either the source YCbCr frames or the transcoded YCbCr frames whichever has a larger video resolution to match a video resolution of either the source YCbCr frames or the transcoded YCbCr frames whichever has a smaller video resolution.

13. The method of claim 11, wherein the step of finding a pair of matching frames in the source YCbCr frames and the transcoded YCbCr frames further comprises the steps of:

creating a video fingerprint of a first frame from the source YCbCr frames using a YCbCr histogram;
searching the transcoded YCbCr frames to find a transcoded YCbCr frame that matches the video fingerprint of the first frame in the source YCbCr frames;
if the searching step is not successful, then creating a video fingerprint of a second frame from the source YCbCr frames using a YCbCr histogram, and searching the transcoded YCbCr frames to find a transcoded YCbCr frame that matches the video fingerprint of the second frame in the source YCbCr frames; and
if the second searching step is not successful, then repeating the creating step and the searching step using another frame from the source YCbCr frames until a corresponding transcoded YCbCr frame is found in the transcoded YCbCr frames or an end of the source YCbCr frames is reached.

14. The method of claim 11, wherein the step of comparing one-by-one all subsequent pairs of frames in the source YCbCr frames and the transcoded YCbCr frames to obtain quality values further comprises the steps of computing a mean square error, MSE, for each subsequent pair of frames and then computing a peak signal to noise ratio, PSNR, for each subsequent pair of frames using in part the corresponding computed MSE to obtain quality values used to determine if the transcoded video file is to be rejected on a quality basis.

15. The method of claim 14, wherein values used for computing the MSE and the PSNR are taken from luma planes of the source YCbCr frames and the transcoded YCbCr frames.

100

| 102 | 106 | 110 |
|---|---|---|
| SOURCE VIDEO FILE | RAW VIDEO | TRANSCODED VIDEO FILE |

DECODER    ENCODER

104    **FIG. 1**    108

300

**TRANSCODE VIDEO VERIFIER DEVICE**

302    304

PROCESSOR    MEMORY

— DECODE SOURCE VIDEO FILE    306

— DECODE TRANSCODED VIDEO FILE    308

— SYNCHRONIZE VIDEO RESOLUTIONS OF SOURCE YCbCr FRAMES AND TRANSCODED YCbCr FRAMES    310

— FIND PAIR OF MATCHING FRAMES IN SOURCE YCbCr FRAMES AND TRANSCODED YCbCr FRAMES    312

— COMPARE SUBSEQUENT PAIRS OF SOURCE YCbCr FRAMES AND TRANSCODED YCbCr FRAMES    314

**FIG. 3**

FIG. 2

400

402

404

**SOURCE VIDEO DECODING STEP**

402a — RECEIVING SOURCE VIDEO FILE

402b — DECODING SOURCE VIDEO FILE

402c — GENERATING SOURCE YCbCr FRAMES

**TRANSCODE VIDEO DECODING STEP**

RECEIVING TRANSCODED VIDEO FILE — 404a

DECODING TRANSCODED VIDEO FILE — 404b

GENERATING TRANSCODED YCbCr FRAMES — 404c

**VIDEO RESOLUTING SYNCHRONIZATION STEP**

406

406a

DETERMINING IF SOURCE YCbCr FRAMES AND TRANSCODED YCbCr FRAMES HAVE DIFFERENT VIDEO RESOLUTIONS?

NO

YES

406b — SCALING DOWN VIDEO RESOLUTION OF EITHER SOURCE YCbCr FRAMES OR TRANSCODED YCbCr FRAMES

**FRAME COMPARATOR STEP**

408a — FINDING PAIR OF MATCHING FRAMES IN SOURCE YCbCr FRAMES AND TRANSCODED YCbCr FRAMES

408

408b — COMPARING SUBSEQUENT PAIRS OF SOURCE YCbCr FRAMES AND TRANSCODED YCbCr FRAMES

FIG. 4